# FASCICULE DE BREVET EUROPEEN

(11) **EP 4 523 968 B1**
(45) Date de publication et mention de la délivrance du brevet: **22.07.2026**
(21) Numéro de dépôt: 24199873.1
(22) Date de dépôt: 11.09.2024
(51) Int. Cl.: B60R 5/00, B60R 21/02

(54) **DISPOSITIF DE CLOISONNEMENT COMPORTANT LES MOYENS RENDANT APTE TROIS CONFIGURATIONS D'UTILISATION**
TRENNWANDVORRICHTUNG MIT MITTELN ZUR ERMÖGLICHUNG VON DREI VERWENDUNGSKONFIGURATIONEN
PARTITIONING DEVICE COMPRISING MEANS MAKING THREE CONFIGURATIONS OF USE

(30) Priorité: 15.09.2023 FR 2309735
(43) Date de publication de la demande: 19.03.2025
(73) Titulaire: Renault s.a.s, 92100 Boulogne Billancourt (FR)
(72) Inventeur: POULLARD, Christophe, 78640 Villiers Saint Frédéric (FR)

(56) Documents cités:
- EP-A1- 3 715 185
- WO-A1-2014/049233
- FR-A1- 3 010 021

## Description

Dans le domaine des véhicules de type utilitaire, le compartiment de chargement est en communication avec l'habitacle du véhicule, de sorte qu'un dispositif de cloisonnement est utilisé afin de sécuriser les occupants en cas de projection d'un objet transporté, notamment lors d'un accident.

Les dispositifs de cloisonnement connus peuvent comporter au moins une paroi fixe, voire une paroi fixe située derrière le siège conducteur et une paroi fixe située derrière le siège passager. Bien souvent, la partie fixe située derrière le siège passager comprend une trappe d'accès fermant une ouverture pratiquée au travers de la paroi. Quand bien même une telle ouverture permet à des objets présentant une longueur supérieure à celle du compartiment de chargement, d'évoluer au travers de l'habitacle, la dimension de la trappe ne permet le chargement d'objet volumineux dans l'habitacle.

Parmi les véhicules de type utilitaire, il est également connu des véhicules sans pied milieu qui sont grandement appréciés du fait de leur ouverture agrandie par rapport aux véhicules ayant un pied milieu délimitant deux ouvertures latérales, chacune fermée par un ouvrant. Les ouvrants peuvent être l'un avant de type battant, l'autre arrière de type à coulissement par exemple. De manière remarquable, l'ouverture agrandie rend possible le chargement d'objet volumineux par le côté latéral du véhicule, ce que certains utilisateurs recherchent. Cet avantage trouve toutefois une limite dans le cas d'un véhicule ayant une ouverture agrandie et une cloison de séparation, notamment du fait que la cloison de séparation comprend un bord latéral extérieur qui coupe en deux parties l'accès à l'intérieur du véhicule par l'ouverture agrandie, rendant ainsi impossible le chargement et le transport d'objet volumineux à la fois au travers du compartiment de chargement et de l'habitacle.

Pour répondre à ces problèmes, les dispositifs de cloisonnement connus peuvent comporter une partie fixe et une partie mobile, cette dernière étant bien souvent articulée autour d'un axe vertical de telle sorte que la partie mobile est apte à prendre une position d'ouverture qui est perpendiculaire à la partie fixe.

Dans une telle configuration, la partie mobile est disposée latéralement au conducteur, ce qui obstrue son champ de vision, notamment rend impossible la rétrovision latérale.

Le document EP 3 715 185 divulgue un arrangement d'une caisse d'un véhicule selon le préambule de la revendication 1.

C'est dans cet environnement que l'objet de l'invention est apparu.

L'objet de l'invention consiste en un arrangement d'une caisse d'un véhicule comportant un dispositif de cloisonnement rendant apte la séparation, le chargement et de transport d'objet au travers de zones de chargement et d'habitacle du véhicule délimitée notamment par un plancher, le véhicule comprenant une ouverture latérale apte à être fermée par au moins un ouvrant, notamment par deux ouvrants directement adjacents en position de fermeture, au moins l'un d'entre les ouvrants étant vitré, le dispositif de cloisonnement comportant une cloison de séparation mobile. De manière particulière, la cloison de séparation mobile comprend une partie supérieure reliée à un premier dispositif d'articulation rendant apte sa rotation autour d'un axe vertical par rapport à la caisse du véhicule, une partie inférieure étant reliée à un second dispositif d'articulation rendant apte sa rotation autour d'un axe transversal par rapport à la partie supérieure, l'axe transversal de rotation étant situé approximativement à une hauteur du plancher définie selon un encadrement de vitre de l'un des ouvrants, notamment selon une hauteur d'un seuil de vitre de l'un des ouvrants.

Selon d'autres particularités de conception de l'arrangement, il peut comprendre les caractéristiques suivantes prises séparément ou en combinaison entre elles :
- les premier et second dispositifs d'articulation rendent apte les différentes configurations d'utilisation parmi une configuration de séparation, une configuration de chargement et une configuration de transport agrandi selon laquelle le champ de vision et/ou de rétrovision du conducteur est approximativement d'au moins 180° par rapport à la vertical ;
- la configuration de séparation est réalisée par une disposition de la cloison de séparation mobile s'étendant au prolongement d'une cloison de séparation fixe, notamment les parties supérieure et inférieure s'étendent toutes deux transversalement à la caisse, notamment directement l'une au-dessus de l'autre de telle sorte que la portion périphérique inférieure de la cloison de séparation mobile est réalisée uniquement par la partie inférieure, laquelle est notamment disposée à proximité immédiate d'un plancher du véhicule ;
- des bords latéraux extérieurs des parties supérieure et inférieure de la cloison de séparation mobile sont destinés à s'étendre sensiblement au droit d'au moins l'une des portes latérales fermant partiellement l'ouverture de côté de caisse, notamment sensiblement au droit d'une zone de jonction des portes latérales respectivement fermées ;
- la configuration de chargement est réalisée par une disposition des parties supérieure et inférieure de la cloison de séparation mobile perpendiculairement à la cloison de séparation fixe, notamment selon une disposition des parties supérieure et inférieure l'une au-dessus de l'autre ;
- la configuration de transport agrandi est réalisée par une disposition des parties supérieure et inférieure de la cloison de séparation mobile au prolongement de la cloison de séparation fixe de sorte que les cloisons de séparation fixe et mobile s'étendent transversalement au véhicule ;
- la configuration de transport agrandi est réalisée par une disposition de la partie supérieure de la cloison de séparation mobile au prolongement de la cloison de séparation fixe, et par une disposition de la partie inférieure de la cloison de séparation mobile pivotée vers le haut de sorte que la partie inférieure en position retournée est disposée contre la partie supérieure de la cloison mobile, notamment contre une face avant de la partie supérieure de la cloison de séparation mobile ;
- il comprend un moyen de verrouillage de la partie inférieure de la cloison de séparation mobile sur la partie supérieure et/ou sur le plancher du véhicule ;
- il comprend un moyen de détection de la configuration choisie et d'alerte de telle sorte qu'un signal d'alerte sonore et/ou visuel est émis lorsque le dispositif de cloisonnement est en configuration de chargement .

L'invention a aussi trait à véhicule comportant au niveau de l'un de ces côtés de caisse, au moins une ouverture, une porte avant, une porte arrière, l'ouverture étant apte à être fermée par les portes avant et arrière respectivement en position fermée, et comprend l'arrangement ayant tout ou partie des caractéristiques précédemment décrites.

Véhicule selon l'invention peut également comprendre les caractéristiques suivantes :
- la porte avant est de type battante, la porte arrière de type à coulissement longitudinal ;
- la porte avant comprend un encadrement définissant un seuil de vitre en dessous duquel, selon un axe vertical, le second dispositif d'articulation évolue ;
- le dispositif de cloisonnement est en tout ou partie réalisée par moulage d'une matière plastique, notamment la cloison de séparation fixe et/ou la cloison de séparation mobile est en matière plastique, notamment la partie supérieure et/ou la partie inférieure de la cloison de séparation mobile est réalisée en matière plastique.

D'autres particularités et avantages de l'invention ressortiront à la lecture de la description faite ci-après d'un mode de réalisation particulier de l'invention, donné à titre indicatif mais non limitatif, en référence aux figures annexées dans lesquelles :
- la [Fig.1] est une vue de côté d'un véhicule automobile, selon l'invention ;
- la [Fig.2] est une vue schématique partielle de trois quart avant de la caisse du véhicule de la [Fig.1] équipé d'un dispositif de cloisonnement, selon une configuration de séparation totale, selon l'invention ;
- la [Fig.3] est une représentation schématique partielle de trois quart avant de la caisse du véhicule de la [Fig.1], le dispositif de cloisonnement étant dans une configuration de chargement, selon l'invention ;
- la [Fig.4] est une représentation schématique partielle de trois quart avant de la caisse du véhicule de la [Fig.1], le dispositif de cloisonnement étant dans une configuration de transport, selon l'invention ;
- la [Fig.5] est une représentation schématique partielle de côté du véhicule de la [Fig.4] mettant en évidence la position relative du dispositif de cloisonnement au regard d'une zone de jonction des portes avant et arrière fermant l'unique ouverture latérale, selon l'invention.

La description qui suit est faite en référence à un trièdre X, Y et Z associé classiquement à un véhicule automobile, dans lequel X est la direction longitudinale avant-arrière du véhicule dirigée vers l'arrière, Y est la direction transversale droite-gauche au véhicule, qui est horizontale et perpendiculaire à X, dirigée vers la droite, et Z est la direction verticale dirigée vers le dessus. Par ailleurs les termes « avant », « arrière », « droit », « gauche », « horizontal », « vertical », supérieur » et « inférieur » sont relatives au véhicule ou à une partie de celui-ci et sont définis par rapport au sens de déplacement du véhicule.

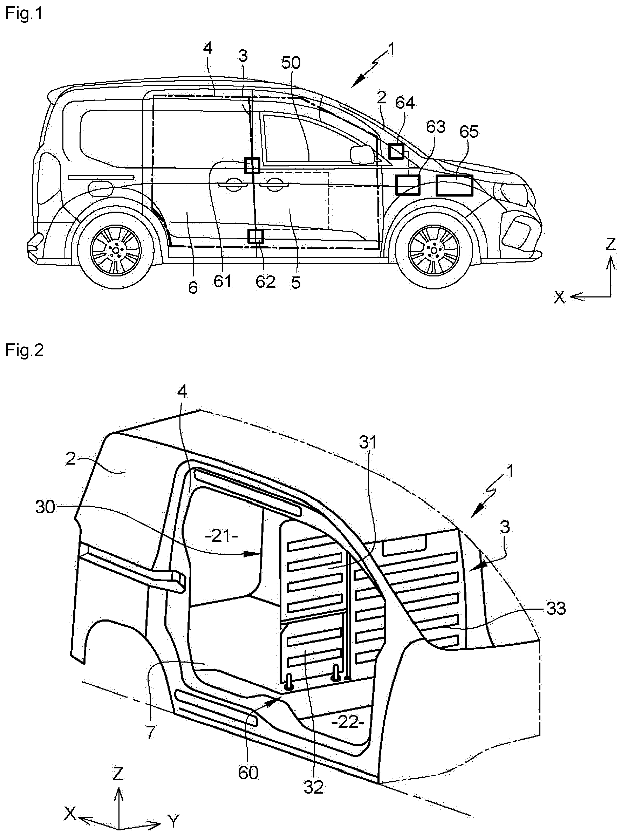

En référence à la [Fig.1], il est représenté un véhicule 2 qui est du type d'un véhicule utilitaire avec une zone arrière de chargement, ici représentée tôlée, et une zone avant destinée à au moins un occupant, notamment le conducteur. La zone avant définit le cockpit du véhicule qui est rendu accessible par l'ouvrant avant 5, qui est préférentiellement du type d'une porte latérale battante, notamment par un dispositif d'articulation à rotation constitué de charnières reliant la porte avant 5 au pied avant de la caisse du véhicule 2. La porte latérale battante 5 est pourvue d'une vitre au travers de laquelle s'opère la vision du conducteur. La vitre évolue au travers d'un encadrement 50 de vitre. La zone arrière définit le compartiment de chargement qui est rendu accessible par l'ouvrant arrière 6, qui est préférentiellement du type d'une porte latérale coulissante le long de l'axe longitudinal X du véhicule.

L'accessibilité aux zones avant et arrière est rendue possible par une ouverture 4, qui est alors unique, et fermée par les portes avant battante 5 et arrière coulissante 6.

Le véhicule de la [Fig.1] comprend en outre l'arrangement 1 de la caisse du véhicule 2 comportant un dispositif de cloisonnement 3 qui permet :
- de séparer totalement les zones avant et arrière par un positionnement du dispositif de cloisonnement totalement transversalement au véhicule, c'est-à-dire le long de l'axe Y,
- de charger le véhicule d'un objet évoluant au travers des zones avant et arrière par une disposition du dispositif de cloisonnement en partie longitudinalement au véhicule, c'est-à-dire le long de l'axe X,
- de transporter un objet évoluant au travers des zones avant et arrière tout en sécurisant le transport par un placement particulier d'une partie du dispositif de cloisonnement par rapport à une autre partie du dispositif de cloisonnement, comme cela sera détaillé par la suite.

La [Fig.2] illustre la caisse du véhicule 2 comportant le dispositif de cloisonnement 3 lequel se compose d'une cloison de séparation fixe 33, préférentiellement disposée à l'arrière du siège conducteur non représenté. La cloison de séparation fixe s'étend le long de l'axe transversale Y. Elle est prolongée par une cloison de séparation mobile 30 qui se compose d'une partie supérieure 31 et d'une partie inférieure 32, représentées ici l'une au-dessus de l'autre.

Le maintien de la cloison de séparation mobile 30 est réalisé par un dispositif de verrouillage 60 qui vise à la fixer au niveau du plancher 7. Le dispositif de verrouillage 60 peut être du type d'une tige coulissante verticalement venant en prise d'une ouverture réalisée dans le plancher.

Le dispositif de cloisonnement 3 en configuration de séparation CS assure un cloisonnement total de l'ouverture entre la partie avant définissant la zone d'habitacle 22 et la partie arrière définissant la zone de chargement 21.

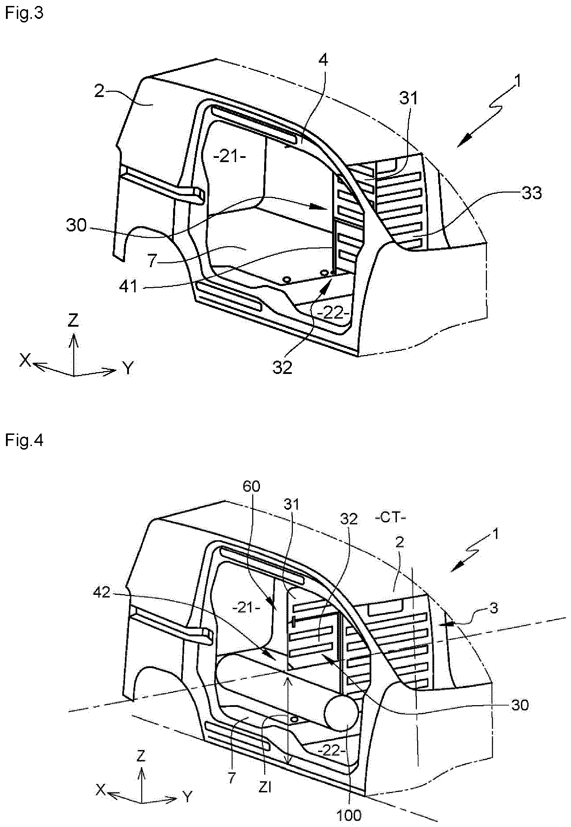

La [Fig.3] représente la configuration de chargement CC du dispositif de cloisonnement 3 selon laquelle la cloison de séparation mobile 30 est pivotée vers l'avant autour d'un axe Z. L'angle de rotation est d'environ 90°, de telle sorte que la cloison de séparation mobile 30 s'étend de manière sensiblement perpendiculaire à la cloison de séparation fixe 33. Dans cette position, le champ de vision et/ou de rétrovision du conducteur est totalement obstrué de sorte que la configuration est limitée au temps de chargement où l'accessibilité à l'intérieur du véhicule comportant une unique ouverture 4 est augmentée.

Le dispositif de cloisonnement 3 est pourvu d'un dispositif d'articulation 41 qui rend apte la rotation de la cloison de séparation mobile 30 autour d'un axe Z. La dispositif d'articulation 41 peut comprendre une tige verticale reliée de manière solidaire à la partie supérieure 31. Le bord intérieur de la partie supérieure 31 comprend la tige verticale qui s'étend en saillie vers le bas jusqu'à venir en liaison à rotation avec le plancher 7. La hauteur libre de la tige verticale est sensiblement identique à la hauteur de la partie inférieure 32 de la cloison de séparation mobile 30.

Le configuration de chargement CC, la cloison de séparation mobile 30 est disposée intégralement dans la zone d'habitacle 22.

La [Fig.4] représente la configuration de transport CT du dispositif de cloisonnement 3 selon laquelle la cloison de séparation mobile 30 est orientée selon un axe transversal Y au véhicule. La partie supérieure 31 est disposée à l'identique de la configuration de séparation CS. La partie inférieure 32 est pivoté autour d'un axe transversal Y autour de la partie supérieure 31. La partie inférieur 32 est liée à rotation à la partie supérieure 31, notamment par le biais d'un second dispositif d'articulation 42, qui pourrait être du type de charnières d'articulation, de telle sorte que le dispositif de cloisonnement 3 délimite avec le plancher 7 une ouverture d'accès entre la zone de chargement 21 et la zone d'habitacle 22, côté passager. La hauteur de l'ouverture d'accès est sensiblement égale à la hauteur de la partie inférieure 32. Le second dispositif d'articulation 42 est disposé à l'interface des parties supérieure et inférieure 31, 32, notamment de leur bord respectif inférieur et supérieur.

Le second dispositif d'articulation 42 est positionné au niveau de la cloison de séparation mobile 30 à une hauteur Z1 du plancher 7 qui est définie par rapport au champ de vision et/ou de rétrovision 200 du conducteur.

Le dispositif de verrouillage 60 qui permet de maintenir la cloison de séparation mobile en configuration de séparation CS, peut également être utilisé afin de maintenir la partie inférieure 32 repliée contre la partie supérieure 31.

La hauteur Z1 correspond approximativement à la hauteur de la partie inférieure 32 de la cloison de séparation mobile 30.

La partie inférieure 32 peut être assimilée à une trappe d'accès assurant la communication entre les zones de chargement 21 et d'habitacle 22.

La hauteur Z1 est assujettie à la géométrie de la porte avant 5, plus particulièrement de l'encadrement 50 de vitre qui la constitue. L'encadrement 50 de vitre délimite un seuil 51 de vitre qui s'étend de manière sensiblement horizontale à une hauteur Z2 par rapport au plancher 7.

L'axe de rotation Y du second dispositif d'articulation 42 de la partie inférieure 32 par rapport à la partie supérieure 31 est au plus situé à la hauteur Z2 défini par l'encadrement 50 de vitre de la porte avant 5.

La hauteur de la partie inférieure 32 de la cloison de séparation mobile 30 est tout au plus égale à la hauteur Z2 le long de laquelle évolue le seuil 51 de vitre. L'ouverture d'accès entre les zones de chargement 21 et d'habitacle 22, telle qu'elle est obtenue par le pivotement de la partie inférieure 32 contre la partie supérieure 31, est délimitée en partie sommitale par la position relative du second dispositif d'articulation 42 par rapport au plancher 7. Ainsi, un objet 100 transporté à l'horizontal au travers de l'ouverture d'accès ne saurait obstruer le champ de vision et/ou de rétrovision du conducteur, le bord inférieur de la partie supérieure 31 formant une barrière limitant la hauteur de l'objet 100 à transporter.

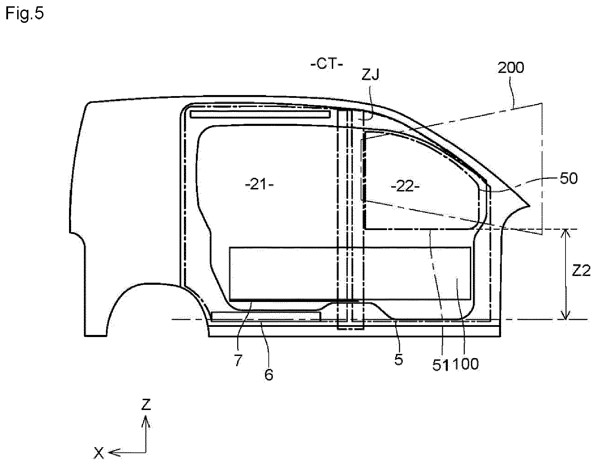

Avantageusement, le dispositif de cloisonnement en configuration de transport CT se compose ainsi d'une architecture selon laquelle la partie inférieure 32 est rabattue sur la partie supérieure 31 afin de former un ensemble dont l'épaisseur est inférieure à une zone de jonction ZJ des ouvrants latéraux 5 et 6, comme cela est visible à la [Fig.5]. En d'autres termes, les bords latéraux extérieurs des parties supérieure 31 et inférieure 32 de la cloison de séparation mobile sont disposés transversalement au droit de la structure des portes avant 5 et arrière 6 fermées de telle sorte qu'aucune partie du dispositif de cloisonnement 3 ne s'inscrit dans le champ de vision et/ou de rétrovision 200 du conducteur. Le champ de vision et/ou de rétrovision 200 est ainsi approximativement laissé libre à 180° par rapport à un axe vertical Z.

Le dispositif de cloisonnement 3 peut être réalisé en matière plastique ou composite, notamment avec de la fibre renforcée. Il peut comprendre des poutres de section creuse afin d'augmenter sa tenue au choc.

Selon une variante de réalisation, le dispositif de cloisonnement 3 est réalisé à partie d'une plaque d'acier emboutie afin de créer des éléments horizontaux de rigidification.

Le dispositif de cloisonnement 3 de l'invention est de conception simple et peu couteux. Il permet de conjuguer la sécurité et la capacité de chargement augmentée en permettant le transport d'au moins un objet disposé au niveau des zones de chargement 21 et d'habitacle 22, sans que le champ de vision et/ou de rétrovision 200 ne soit obstrué, même que partiellement.

Le dispositif de cloisonnement 3 est en outre remarquable en ce que le premier dispositif d'articulation 41 lui permet un basculement total dans la zone d'habitacle de sorte que le chargement est grandement facilité, notamment pour un véhicule dépourvu d'un pied milieu dont l'ouverture latérale est une ouverture unique qui est destinée à être fermée par deux ouvrants 5, 6 directement adjacents.

Les premier et deuxième dispositifs d'articulation 41 et 42 sont reliés à des capteurs 61, 62 de position connectés électriquement à une unité de contrôle 63 de telle sorte qu'il est rendu possible d'identifier la configuration effective du dispositif de cloisonnement 3, parmi la configuration de séparation CS, la configuration de chargement CC et la configuration de transport CT. L'unité de contrôle 63 est reliée à un dispositif d'avertissement 64, qui peut être visuel et/ou sonore, de telle sorte que la configuration de chargement CC engendre un signal d'avertissement à destination du conducteur dès lors que le calculateur moteur 65 est réveillé, lorsque par exemple le conducteur actionne un bouton de mise en marche du véhicule.

L'arrangement 1 de la caisse du véhicule 2 comportant un dispositif de cloisonnement 3 est remarquable en ce qu'il répond favorablement à l'aspect sécuritaire d'un transport d'objet entre les zones de chargement 21 et d'habitacle 22, tout en rendant apte le chargement amélioré pour un véhicule sans pied milieu.

## Revendications

1. Arrangement (1) d'une caisse d'un véhicule (2) comportant un dispositif de cloisonnement (3) rendant apte la séparation, le chargement et le transport d'objet (100) au travers de zones de chargement (21) et d'habitacle (22) du véhicule délimitée notamment par un plancher (7), le véhicule comprenant une ouverture latérale (4) apte à être fermée par au moins un ouvrant (5 ; 6), notamment par deux ouvrants (5, 6) directement adjacents en position de fermeture, au moins l'un des ouvrants (5, 6) étant vitré, le dispositif de cloisonnement (3) comportant une cloison de séparation mobile (30), la cloison de séparation mobile comprenant une partie supérieure (31) reliée à un premier dispositif d'articulation (41) rendant apte sa rotation autour d'un axe vertical (Z) par rapport à la caisse du véhicule, et une partie inférieure (32) reliée à un second dispositif d'articulation (42) second **caractérisé en ce que** le second dispositif d'articulation (42) rend apte la rotation de la partie inférieure (32) autour d'un axe transversal (Y) par rapport à la partie supérieure, l'axe transversal (Y) de rotation étant situé approximativement à une hauteur (Z1) du plancher (7) définie selon un encadrement (50) de vitre de l'un des ouvrants, notamment selon une hauteur (Z2) d'un seuil (51) de vitre de l'un des ouvrants (5 ; 6).

2. Arrangement (1) selon la revendication précédente, **caractérisé en ce que** les premier et second dispositifs d'articulation (41 ; 42) rendent apte les différentes configurations d'utilisation parmi une configuration de séparation (CS), une configuration de chargement (CC) et une configuration de transport (CT) agrandi selon laquelle le champ de vision et/ou de rétrovision (200) du conducteur est approximativement d'au moins 180° par rapport à la vertical.

3. Arrangement (1) selon la revendication précédente, **caractérisé en ce que** la configuration de séparation (CS) est réalisée par une disposition de la cloison de séparation mobile (30) s'étendant au prolongement d'une cloison de séparation fixe (33), notamment les parties supérieure et inférieure (31 ; 32) s'étendent toutes deux transversalement à la caisse, notamment directement l'une au-dessus de l'autre de telle sorte que la portion périphérique inférieure de la cloison de séparation mobile (30) est réalisée uniquement par la partie inférieure (32), laquelle est notamment disposée à proximité immédiate d'un plancher (7) du véhicule.

4. Arrangement (1) selon la revendication précédente, **caractérisé en ce que** des bords latéraux extérieurs des parties supérieure et inférieure (31 ; 32) de la cloison de séparation mobile (30) sont destinés à s'étendre sensiblement au droit d'au moins l'une des portes latérales (5 ; 6) fermant partiellement l'ouverture (4) de côté de caisse, notamment sensiblement au droit d'une zone de jonction (ZJ) des portes latérales (5 ; 6) respectivement fermées.

5. Arrangement (1) selon l'une quelconque des revendications 2 à 4 en combinaison avec la revendication 3, **caractérisé en ce que** la configuration de chargement (CC) est réalisée par une disposition des parties supérieure et inférieure (31 ; 32) de la cloison de séparation mobile (30) perpendiculairement à la cloison de séparation fixe (33), notamment selon une disposition des parties supérieure et inférieure l'une au-dessus de l'autre.

6. Arrangement (1) selon l'une quelconque des revendications 2 à 5 en combinaison avec la revendication 3, **caractérisé en ce que** la configuration de transport (CT) agrandi est réalisée par une disposition des parties supérieure et inférieure (31 ; 32) de la cloison de séparation mobile (30) au prolongement de la cloison de séparation fixe (33) de sorte que les cloisons de séparation fixe et mobile (30 ; 33) s'étendent transversalement au véhicule.

7. Arrangement (1) selon l'une quelconque des revendications 2 à 6, **caractérisé en ce que** la configuration de transport (CT) agrandi est réalisée par une disposition de la partie supérieure (31) de la cloison de séparation mobile (30) au prolongement de la cloison de séparation fixe (33), et par une disposition de la partie inférieure (32) de la cloison de séparation mobile (30) pivotée vers le haut de sorte que la partie inférieure (32) en position retournée est disposée contre la partie supérieure (31) de la cloison mobile, notamment contre une face avant de la partie supérieure (31) de la cloison de séparation mobile (30).

8. Arrangement (1) selon la revendication précédente, **caractérisé en ce qu'**il comprend un moyen de verrouillage (60) de la partie inférieure (32) de la cloison de séparation mobile (30) sur la partie supérieure (31) et/ou sur le plancher (7) du véhicule.

9. Arrangement (1) selon l'une quelconque des revendications 2 à 8, **caractérisé en ce qu'**il comprend un moyen de détection de la configuration choisie et d'alerte de telle sorte qu'un signal d'alerte sonore et/ou visuel est émis lorsque le dispositif de cloisonnement (3) est en configuration de chargement (CC).

10. Véhicule (2) comportant au niveau de l'un de ces côtés de caisse, au moins une ouverture (4), une porte avant (5), une porte arrière (6), l'ouverture étant apte à être fermée par les portes avant et arrière respectivement en position fermée, **caractérisé en ce qu'**il comprend un arrangement (1) selon l'une quelconque des revendications précédentes.

## Patentansprüche

1. Anordnung (1) einer Karosserie eines Fahrzeugs (2), die eine Trennwandvorrichtung (3) aufweist, welche die Trennung, das Beladen und den Transport eines Gegenstands (100) durch einen Ladebereich (21) und einen Fahrerhausbereich (22) des Fahrzeugs hindurch ermöglicht, die insbesondere durch einen Boden (7) begrenzt werden, wobei das Fahrzeug eine seitliche Öffnung (4) aufweist, die durch mindestens ein Öffnungselement (5; 6) verschließbar ist, insbesondere durch zwei Öffnungselemente (5, 6), die in der Schließposition unmittelbar benachbart sind, wobei mindestens eines der Öffnungselemente (5, 6) mit einer Fensterscheibe versehen ist, wobei die Trennwandvorrichtung (3) eine bewegliche Trennwand (30) aufweist, wobei die bewegliche Trennwand einen oberen Teil (31) umfasst, der mit einer ersten Gelenkvorrichtung (41) verbunden ist, die seine Drehung um eine vertikale Achse (Z) bezüglich der Karosserie des Fahrzeugs ermöglicht, und einen unteren Teil (32), der mit einer zweiten Gelenkvorrichtung (42) verbunden ist, **dadurch gekennzeichnet, dass** die Gelenkvorrichtung (42) seine Drehung um eine Querachse (Y) bezüglich des oberen Teils ermöglicht, wobei sich die Querdrehachse (Y) ungefähr auf einer Höhe (Z1) über dem Boden (7) befindet, die gemäß einer Fensterumrahmung (50) des einen der Öffnungselemente definiert ist, insbesondere gemäß einer Höhe (Z2) einer Fensterschwelle (51) des einen der Öffnungselemente (5; 6).

2. Anordnung (1) nach dem vorhergehenden Anspruch, **dadurch gekennzeichnet, dass** die erste und die zweite Gelenkvorrichtung (41; 42) die verschiedenen Verwendungskonfigurationen ermöglichen, nämlich eine Trennkonfiguration (CS), eine Beladungskonfiguration (CC) und eine Konfiguration des vergrößerten Transports (CT), bei welcher das Sichtfeld und/oder Rückblickfeld (200) des Fahrers ungefähr mindestens 180° bezüglich der Vertikalen beträgt.

3. Anordnung (1) nach dem vorhergehenden Anspruch, **dadurch gekennzeichnet, dass** die Trennkonfiguration (CS) durch eine Anordnung der beweglichen Trennwand (30) hergestellt wird, die sich in der Verlängerung einer feststehenden Trennwand (33) erstreckt, wobei insbesondere der obere und der untere Teil (31; 32) sich alle beide quer zur Karosserie erstrecken, insbesondere direkt übereinander, derart, dass der untere Umfangsabschnitt der beweglichen Trennwand (30) ausschließlich von dem unteren Teil (32) gebildet wird, der insbesondere in unmittelbarer Nähe eines Bodens (7) des Fahrzeugs angeordnet ist.

4. Anordnung (1) nach dem vorhergehenden Anspruch, **dadurch gekennzeichnet, dass** äußere Seitenränder des oberen und des unteren Teils (31; 32) der beweglichen Trennwand (30) dazu bestimmt sind, sich im Wesentlichen direkt gegenüber mindestens einer der Seitentüren (5; 6) zu erstrecken, welche die Öffnung (4) der Karosserieseite teilweise verschließen, insbesondere direkt gegenüber einem Verbindungsbereich (ZJ) der jeweils geschlossenen Seitentüren (5; 6).

5. Anordnung (1) nach einem der Ansprüche 2 bis 4 in Kombination mit Anspruch 3, **dadurch gekennzeichnet, dass** die Beladungskonfiguration (CC) durch eine Anordnung des oberen und des unteren Teils (31; 32) der beweglichen Trennwand (30) senkrecht zu der feststehenden Trennwand (33) hergestellt wird, insbesondere mit einer Anordnung des oberen und des unteren Teils übereinander.

6. Anordnung (1) nach einem der Ansprüche 2 bis 5 in Kombination mit Anspruch 3, **dadurch gekennzeichnet, dass** die Konfiguration des vergrößerten Transports (CT) durch eine Anordnung des oberen und des unteren Teils (31; 32) der beweglichen Trennwand (30) in der Verlängerung der feststehenden Trennwand (33) hergestellt wird, derart, dass die feststehende und die bewegliche Trennwand (30; 33) sich quer zum Fahrzeug erstrecken.

7. Anordnung (1) nach einem der Ansprüche 2 bis 6, **dadurch gekennzeichnet, dass** die Konfiguration des vergrößerten Transports (CT) durch eine Anordnung des oberen Teils (31) der beweglichen Trennwand (30) in der Verlängerung der feststehenden Trennwand (33) hergestellt wird, und durch eine nach oben geschwenkte Anordnung des unteren Teils (32) der beweglichen Trennwand (30), derart, dass der untere Teil (32) in einer umgewendeten Position am oberen Teil (31) der beweglichen Trennwand anliegend, insbesondere an einer Vorderseite des oberen Teils (31) der beweglichen Trennwand (30) anliegend angeordnet ist.

8. Anordnung (1) nach dem vorhergehenden Anspruch, **dadurch gekennzeichnet, dass** sie ein Mittel zur Verriegelung (60) des unteren Teils (32) der beweglichen Trennwand (30) am oberen Teil (31) und/oder am Boden (7) des Fahrzeugs umfasst.

9. Anordnung (1) nach einem der Ansprüche 2 bis 8, **dadurch gekennzeichnet, dass** sie ein Mittel zur Erkennung der gewählten Konfiguration und Warnung umfasst, derart, dass ein akustisches und/oder visuelles Warnsignal gesendet wird, wenn sich die Trennwandvorrichtung (3) in der Beladungskonfiguration (CC) befindet.

10. Fahrzeug (2), welches an einer seiner Karosserieseiten mindestens eine Öffnung (4), eine vordere Tür (5) und eine hintere Tür (6) aufweist, wobei die Öffnung durch die vordere und die hintere Tür jeweils in einer geschlossenen Position verschließbar ist, **dadurch gekennzeichnet, dass** es eine Anordnung (1) nach einem der vorhergehenden Ansprüche umfasst.

## Claims

1. Arrangement (1) of a body of a vehicle (2) comprising a partitioning device (3) enabling the separating, loading and transporting of objects (100) through loading (21) and passenger compartment (22) zones of the vehicle delimited in particular by a floor (7), the vehicle comprising a lateral opening (4) that is able to be closed by at least one opening panel (5; 6), in particular by two opening panels (5, 6) that are directly adjacent in the closure position, at least one of the opening panels (5, 6) being glazed, the partitioning device (3) having a mobile separating partition (30), the mobile separating partition comprising an upper part (31) connected to a first articulation device (41) enabling it to rotate about a vertical axis (Z) with respect to the body of the vehicle, and a lower part (32) that is connected to a second articulation device (42), **characterized in that** the articulation device (42) enables it to rotate about a transverse axis (Y) with respect to the upper part, the transverse axis (Y) of rotation being situated approximately at a height (Z1) from the floor (7) that is defined according to a window frame (50) of one of the opening panels, in particular according to a height (Z2) of a window sill (51) of one of the opening panels (5; 6).

2. Arrangement (1) according to the preceding claim, **characterized in that** the first and second articulation devices (41; 42) enable the various use configurations among a separating configuration (CS), a loading configuration (CC) and an enlarged transport configuration (CT) in which the field of vision and/or rearview vision (200) of the driver is approximately at least 180° with respect to the vertical.

3. Arrangement (1) according to the preceding claim, **characterized in that** the separating configuration (CS) is realized by a disposition of the mobile separating partition (30) extending so as to extend a fixed separating partition (33), in particular the upper and lower parts (31; 32) both extend transversely to the body, in particular directly one above the other such that the lower peripheral portion of the mobile separating partition (30) is realized solely by the lower part (32), which is in particular disposed in the immediate vicinity of a floor (7) of the vehicle.

4. Arrangement (1) according to the preceding claim, **characterized in that** outer lateral edges of the upper and lower parts (31; 32) of the mobile separating partition (30) are intended to extend substantially in line with at least one of the lateral doors (5; 6) partially closing the body side opening (4), in particular substantially in line with a junction zone (ZJ) of the respectively closed lateral doors (5; 6).

5. Arrangement (1) according to any one of Claims 2 to 4 in combination with Claim 3, **characterized in that** the loading configuration (CC) is realized by a disposition of the upper and lower parts (31; 32) of the mobile separating partition (30) perpendicular to the fixed separating partition (33), in particular according to a disposition of the upper and lower parts one above the other.

6. Arrangement (1) according to any one of Claims 2 to 5 in combination with Claim 3, **characterized in that** the enlarged transport configuration (CT) is realized by a disposition of the upper and lower parts (31; 32) of the mobile separating partition (30) so as to extend the fixed separating partition (33) such that the fixed and mobile separating partitions (30; 33) extend transversely to the vehicle.

7. Arrangement (1) according to any one of Claims 2 to 6, **characterized in that** the enlarged transport configuration (CT) is realized by a disposition of the upper part (31) of the mobile separating partition (30) so as to extend the fixed separating partition (33), and by a disposition of the lower part (32) of the mobile separating partition (30) pivoted upwards such that the lower part (32) in the inverted position is disposed against the upper part (31) of the mobile partition, in particular against a front face of the upper part (31) of the mobile separating partition (30).

8. Arrangement (1) according to the preceding claim, **characterized in that** it comprises a means (60) for locking the lower part (32) of the mobile separating partition (30) to the upper part (31) and/or to the floor (7) of the vehicle.

9. Arrangement (1) according to any one of Claims 2 to 8, **characterized in that** it comprises a means for detecting the selected configuration and for warning such that an audible and/or visual warning signal is emitted when the partitioning device (3) is in the loading configuration (CC).

10. Vehicle (2) having, at one of these body sides, at least one opening (4), a front door (5), a rear door (6), the opening being able to be closed by the front and rear doors respectively in the closed position, **characterized in that** it comprises an arrangement (1) according to any one of the preceding claims.
